# EUROPEAN PATENT APPLICATION

(11) **EP 1 808 622 A1**
(43) Date of publication of application: **18.07.2007**
(21) Application number: 06005997.9
(22) Date of filing: 23.03.2006
(51) Int. Cl.: F16J 15/18, A23G 9/22, A23G 9/04

(54) **Sealing device for ice drinks dispensers**

(30) Priority: 16.01.2006 ES 200600086 U
(71) Applicant: Sencotel S.L., 46722 Beniarjo (Valencia) (ES)
(72) Inventor: Escriva Estruch, Vicente, 46722 Beniarjo Valencia (ES)
(74) Representative: Isern-Jara, Nuria

(57) **Abstract**

A sealing device for ice drink dispenser machines, with an evaporator (1) arranged horizontally with a drive shaft (4) to transfer the movement to a rotating scraper blade (3), with a self lubricating bush (5) fitted to the vertical side of the evaporator (1) and together with the drive shaft (4), and a water tight seal (6) that wraps around said bush (5) and where the base in contact with the evaporator (1) is smooth, and having an internally directed perimeter rim (6A) that is in contact with the internal side wall of the bush (5).

## Description

### OBJECT OF THE INVENTION

The object of the present invention is a sealing device for ice drinks dispenser machines that includes significant innovations and advantages compared to present day sealing devices currently in use.

More specifically it refers to a sealing device for machines for the manufacture of crushed iced drinks that include a horizontally placed evaporator from which a drive shaft emerges that transfers the movement to an easily removed and maintained rotating scraper blade.

### BACKGROUND TO THE INVENTION

In machines for the preparation of crushed ice drinks fitted with a horizontally fitted evaporator, the water tightness is a technical problem that has not been satisfactorily resolved in the present state of the art. Some manufacturers have opted to use a magnetic transmission and thus eliminating the use of a water tight seal but conversely this involves an increase in manufacturing costs. On the other hand, the manufacturers who still maintain the water tight seal in their construction have problems such as product leaks into the inside of the machine due to the wear and tear of parts from friction. In addition, the properties of the food products used in these machines must be taken into account, such as syrups, sugar and water mixes, dairy products, juices, etc., that have some acidity properties, fat contents, abrasion, etc.

The increase in the marketing of dairy products for the making of crushed ice drinks has given rise to a worsening of the water tightness with the present state of the art, which was basically thought up to work with water based drinks.

Two sealing devices are known for the type of machine defined above and which are as follows:
The first type is the rotational water tight seal that rubs directly on the evaporator; however, it has the disadvantage that it causes wear and tear on the evaporator in such a way that it produces a deep groove that, with the passage of time, compels the replacement of the evaporator, an event that means a high cost.
The second type of rotational water tightness is where there is piece inserted between, thus avoiding direct friction with the evaporator. This system prevents the wear and tear on the evaporator but has the main disadvantage that food products accumulate in the area of the union with the evaporator, an area that on some occasions cannot be cleaned or requires the use of tools to dismantle it.

### DESCRIPTION OF THE INVENTION

The present invention has been developed for the purpose of providing a sealing device that solves the previously stated disadvantages, moreover, providing other additional advantages that will be clear from the description which is attached below.

The sealing device of this present invention is designed for ice drink dispensers, said crushed ice drink dispenser including an evaporator arranged horizontally from which a drive shaft protrudes that transfers the movement to a rotating scraper blade, and which is characterised by the fact of having a self lubricating bush fitted next to the vertical face of the evaporator and jointly with the drive shaft, and a water tight seal that externally wraps around said bush and whose contact base with the evaporator is smooth.

In accordance with another aspect of the invention, the water tight seal is fitted with an internally directed perimeter rim that is in contact with the side wall of the inner bush that allows the breaking of a film of grease that forms in the contact area.

By preference the self lubricating bush is made from an elastomeric material body that has a first tronco-conical section and a second cylindrical section with a smaller diameter to that of the tronco-conical section of the base.

Thanks to these characteristics, a simple and highly water tight construction system is obtained with low manufacturing and assembly costs suitable for a large majority of crushed ice drink machines that are available in the market with the previously defined peculiarities that do not require the use of tools for their assembly and dismantling, minimising the wear and tear on the evaporator, increasing the working life of the connected components and which can be used for water based or dairy products. Another aspect that must be highlighted is the suction effect created between the bush and the water tight seal that ensures continuous adherence of the water tight seal and the evaporator.

Other characteristics and advantages of the sealing device for ice drinks object of the present invention will be come clear from the following description of a preferred embodiment, but it is not exclusive, it illustrates by way of example, but the drawings attached are not by way of limitation, in which:

### BRIEF DESCRIPTION OF THE DRAWINGS

Figure 1 shows a side elevation diagram of a conventional crushed ice drink dispenser machine with the sealing device in accordance with the present invention.
Figure 2 shows a detailed sectioned side elevation of the sealing device of the present invention marked with a circle in the previous figure.

### DESCRIPTION OF THE PREFERRED EMBODIMENT

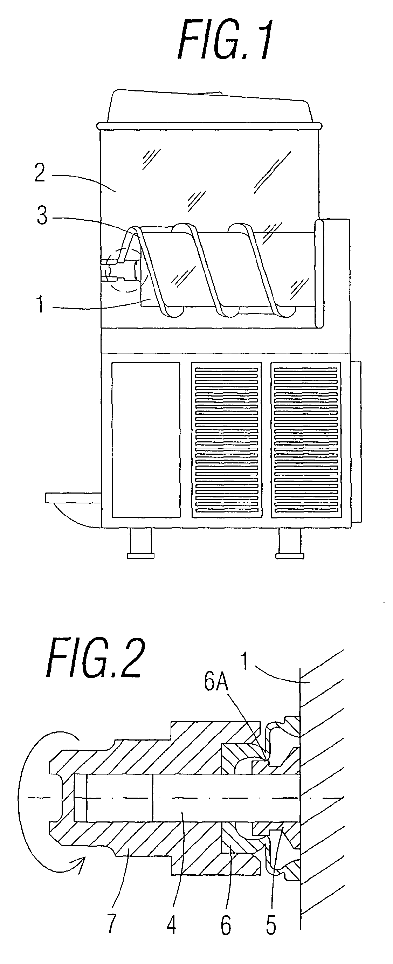

The sealing device described below has been thought out basically for ice drink dispenser machines of the type that are made up from a base that has inside a refrigeration circuit (not shown), an evaporator (1) arranged horizontally on the inside of an upper transparent container (2), said evaporator (1) being fitted with a rotating scraper blade (3), and from which a lateral drive shaft (4) emerges that is fitted to the end of said scraper blade (3) of the crushed ice drink dispenser machine, as and how shown in Figure 1. In Figure 2, it can be seen how said sealing device is made up from a self lubricating bush (5) made from a elastomeric material (for example, Teflon) fitted onto the vertical face of the evaporator (3) and a water tight seal (6) that externally wraps around said bush (5) and where the base in contact with the evaporator is smooth. The rest of the drive shaft (4) that is not protected by said elements is protected by a cap (7) that is fitted to one of the side walls of the container (2).

The sealing device (6) is fitted with an internally directed perimeter rim (6A) that is in contact with the internal side wall of the bush (5) that is made in order to guarantee the water tightness when it is used especially for dairy produce.

The self lubricating bush (5) is made from a body that has a first tronco-conical section and a second cylindrical section with a constant and smaller diameter to that of the tronco-conical section of the base.

The details, shapes, sizes and other accessorial elements, likewise the materials used for the construction of the sealing device of the invention can suitably be substituted for others that are technically equivalent and do not deviate from the essentials of the invention or the scope defined by the claims which are included below.

## Claims

1. A sealing device for ice drinks dispensers where said crushed ice machine includes a horizontally placed evaporator (1) from which a drive shaft (4) emerges that transfers the movement to a rotating scraper blade (3), **characterised in that** it has a self lubricating bush (5) fitted next to the vertical face of the evaporator (1) and jointly with the drive shaft (4) and a water tight seal (6) that externally wraps around said bush (5) and whose contact base with the evaporator (1) is smooth.

2. - A sealing device according to claim 1, **characterised in that** the water tight seal (6) has an internally directed perimeter rim (6A) that is in contact with the internal side wall of the bush (5).

3. - A sealing device according to claim 1, **characterised in that** the self lubricating bush (5) is made from a elastomeric bodied material that has a first tronco-conical section and a second cylindrical section with a smaller diameter to that the base of the tronco-conical section.

4. - A sealing device according to claim 1, **characterised in that** the water tight seal (6) is joined to a cap (7) that is fixed to the drive shaft (4) and together with the rotating scraper blade (3).
